# EUROPEAN PATENT SPECIFICATION

(11) **EP 0 311 202 B1**
(45) Date of publication and mention of the grant of the patent: **11.05.1994**
(21) Application number: 88202170.2
(22) Date of filing: 03.10.1988
(51) Int. Cl.: A01C 17/00, A01C 15/00

(54) **A machine for spreading material, such as fertilizer**
Körnerstreuer, z. B. für Dünger
Epandeur de matériau comme, par exemple, engrais

(30) Priority: 05.10.1987 NL 8702361
(43) Date of publication of application: 12.04.1989
(73) Proprietor: C. van der Lely N.V., NL-3155 PD Maasland (NL)
(72) Inventor: Van der Lely, Cornelis, CH-Zug (CH)
(74) Representative: Mulder, Herman

(56) References cited:
- EP-A- 0 251 401
- FR-A- 2 414 860
- GB-A- 2 058 533
- US-A- 2 872 074

## Description

The invention relates to a machine for spreading material, such as fertilizer, which machine comprises a frame, a hopper and at least one spreader member movably mounted to the frame, said spreader member having at least one thrower blade.

Prior art machines of the above-defined type are known from GB-A-2 058 533.

In the known constructions a measuring device is mounted to the frame of the machine and is arranged in a distance from the spreading member.

It is an object of the invention to improve the machine of the above-mentioned type.

According to the invention at least one measuring device is mounted on the spreader member, said measuring device being mounted on or arranged near the thrower blade to cooperate therewith by throwing out the material during operation of the machine in such a way that the material guided by the thrower blade moves at least along a portion of the measuring device to exert thereon a force to measure the quantity of material thrown out by the thrower blade. By mounting the measuring device to or near the thrower blade on the spreading member an exact measuring of the quantity of the material spread by the spreading member can be obtained. Hereby the forces existing by guiding the material through the thrower blades is used in a useful way to obtain the measuring of the quantity of material spread out.

In this way the measuring device is not an obstacle in the spread pattern and will not disturb the spreading of the material.

The FR-A-2 414 860 shows a known construction of a machine for spreading material. In this known construction the material is guided through tubes at the end of which is provided a spreader plate. The material is moved along the spreader plate and a microphone is mounted on the spreader plate. The microphone indicates during operation of the device if there is spread material or if there is spread sufficient material.

A favourable embodiment of the invention is obtained when the portion of the measuring device forms at least a portion of a wall of the thrower blade. According to a further feature of the invention the portion of the measuring device is provided near the outer end of the thrower blade. A useful construction of the invention is obtained when the spreading member provides a transmitter element cooperating with a receiver rigidly mounted to the frame, for transmitting the measuring signal originating from the measuring device. Hereby the measuring signal produced by a measuring device for the material to be spread can be transmitted in a usefull way to the receiver. According to a further embodiment the measuring signal originating from the measuring device can be calibrated as a measure for the quantity of material spread per unit of surface area. In a further embodiment the measuring signal originating from the measuring device shows the position of the spread pattern of the material relative to the direction of travel (A) of the device during operation.

In accordance with a further feature of the invention, the spreading member comprises at least one rotatably driven thrower disc having a plurality of blades guiding the material, and a measuring device is arranged near only one blade per thrower disc.

The invention furthermore relates to a machine having a measuring device which, by means of the pressure, strain or bending exercised thereon, measures a quantity of material spread.

In addition, according to the invention, there is provided at least one sliding contact for transferring a measuring signal from a measuring device for the material to be spread.

For a better understanding of the invention and to show how the same may be carried into effect, reference will now be made, by way of example, to the accompanying drawings, in which:
Figure 1 is a side view of a machine according to the invention, which machine is connected to the lifting hitch of a tractor;
Figure 2 is a plan view of the spreader member of the machine, taken on the lines II-II in Figure 1;
Figure 3 is a plan view of part of a rotatably driven spreader member as shown in Figure 2, which spreader member is provided with a measuring device arranged near a blade thereof;
Figure 4 is partly a cross-sectional view and partly a view taken in the direction of the arrow IV in Figure 3:
Figure 5 is a plan view similar to that of Figure 3, the spreader member being provided with a different type of measuring device;
Figure 6 is partly a view and partly a cross-sectional view taken in the direction of the arrow VI in Figure 5;
Figure 7 is a plan view, also similar to that of Figure 3, the spreader member again being provided with a different type of measuring device;
Figure 8 is a plan view, similar to that of Figure 3, of a further embodiment of a measuring device;
Figure 9 is partly a view and partly a cross-sectional view through the rotational axis of the rotatably driven spreader member;
Figure 10 is a plan view of a different type of machine in accordance with the invention, the said machine being coupled to a tractor hauling same.

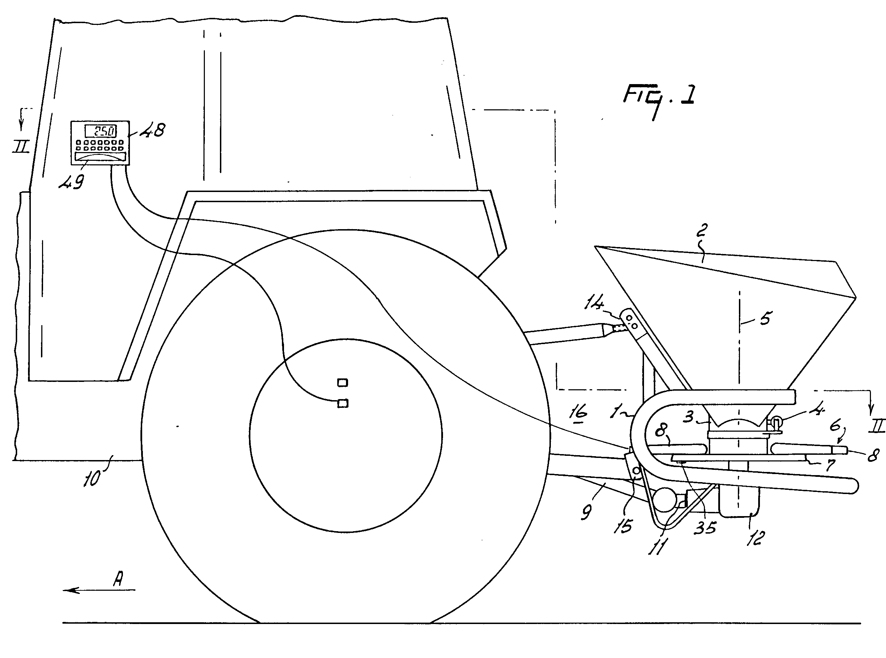

The machine illustrated in Figure 1 for spreading granular or pulverulent material, such as fertilizer, comprises a frame 1 which supports a hopper 2 for the material. To the bottom side of the hopper 2 there is contiguous a discharge tube 3, whose lower portion is pivotable relative to the hopper 2 about an approximately vertical axis 5 by means of a schematically shown hydraulic cylinder 4. The lowermost portion of the discharge tube 3 is provided with (non-shown) discharge apertures for the material, which apertures are adustable in size and through which the material can flow onto spreader member 6 which is rotatably drivable about the axis 5. The spreader member 6 comprises a driven thrower disc 7, the top side of which is provided in a known per se manner with equidistant thrower blades 8.

From its bottom side, the thrower disc 7 is driven via an intermediate shaft 9 which is coupled to the power take-off shaft of a tractor 10 hauling the machine. The intermediate shaft 9 is connected to an ingoing shaft 11, which shaft drives in a known per se manner via a bevel gear transmission accommodated in a gear box 12 (Figure 4) an upwardly extending shaft 13 which has its upper end rigidly connected to the thrower disc 7. The centre line of the shaft 13 coincides with the axis 5 shown in Figure 1.

As is apparent from Figure 1, the machine includes an upper coupling point 14 and lower coupling points 15 for connecting same to the three-point lifting hitch 16 of the tractor 10. The direction of operative travel is denoted by the capital A.

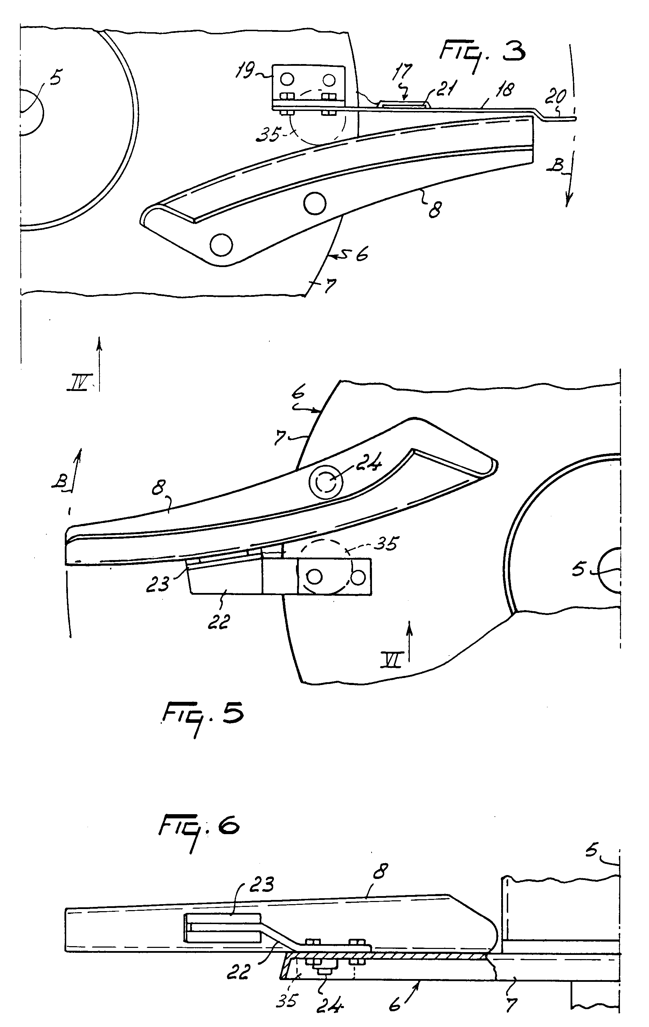

Figure 3 is a plan view of part of the spreader member 6 which is rotatably drivable about the axis 5. The spreader member 6 is fitted with a plurality of blades 8, e.g. six in number, which are arranged equidistantly on the disc 7. Figure 3 shows only one of the blades 8. Like the other blades, this blade extends outwardly. The spreader member 6 is driven in the direction B. Taken from that side of the blade 8 which is the leading side seen in the rotational direction B, the blade is concave. Taken in the radial direction the blade has the shape of a bent plate member that is open at the forwardly facing side. As is shown in Figure 3, the blade 8 is positioned such that its rear boundary near the outer end is arranged approximately radially.

Taken in the rotational direction B, behind the blade 8 there is positioned a measuring device 17 which is connected to the upper side of the thrower disc 7.

The measuring device 17 is arranged near one of the blades 8 only. This also holds for the embodiments shown in Figures 5 to 8, which embodiments are to be described hereinafter.

The measuring device comprises a steel or light-metal guide wall for the material to be spread, which guide wall is constituted by a leaf spring 18 that has its inner end connected to the thrower disc 7 by means of a connection 19. The longitudinal dimension of the leaf spring 18 extends radially and outwardly from its point of connection 19. The largest boundary faces of the leaf spring 18 and its width extend parallel to the axis 5. As is apparent from Figure 3, that portion of the leaf spring 18 which is located near and behind the rear side of the outermost portion of the blade 8 is positioned at a short distance behind the said outermost portion, continues obliquely outwardly and forwardly therebeyond and subsequently is folded back such that the outer leaf spring portion 20 extending outside the outermost portion of the blade 8 is directed approximately radially. The arrangement is furthermore such that, when a spreader member rotates although without material to be spread being fed, the leading side of the outer leaf spring portion 20 encloses, taken in the outward and forward direction, a slight angle with the near-by wall portion of the blade 8 guiding the material to be spread. The blade 8 is dimensioned such that, when it actually guides material, the material leaving same hits the outer leaf spring portion 20 at a slight angle. Consequently, the outer leaf spring portion 20 constitutes part of the blade. As a result thereof, the outer leaf spring portion 20 will sag slightly in a direction opposite to the direction B.

When the spreader member 6 rotates and the blade 8 does not guide material, the said slight angle may be approximately 10 to 15°; when the outer leaf spring portion 20 is hit by material flowing from the blade 8, it may be approximately 2 to 8°, so that the freely outflowing material has a direction which corresponds to the desired direction of spread. However, these values depend on the nature of the material to be spread, on the circumferential speed of the spreader member and on the desired measuring sensitivity.

Near the connection 19, there is affixed to the rear side of the leaf spring 18 a measuring member in the form of a strain gauge 21 which measures the negative strain values in the rear boundary face thereof. In order to increase the sensitivity of the measuring device, it is alternatively possible to affix two strain gauges below each other at the rear side of the leaf spring as well as two strain gauges below each other at the front side thereof with the same spacing from the connection 19, which latter strain gauges measure the positive strain values in the surface of the front boundary face.

In the embodiment of Figures 5 and 6, taken in the rotational direction B of the spreader member 6, a rigid connection means 22 is fitted on the disc 7 behind the blade 8. The connection means 22 extends outwardly to beyond the periphery of the disc 7 and, near its outer end, is fitted with an upwardly directed supporting plate 23 located at a very short distance behind the rear side of the blade 8. The supporting blade 23 is curved such that its front surface area extends along the curved rear face of the blade 8.

In contradistinction to the other embodiments, the blade 8 is freely pivotable about a pivot pin 24 that extends parallel to the axis 5.

The surface of the supporting plate 23 that faces the blade 8 is provided with a measuring device in the form of a FSR-film. The FSR-film (Force Sensing Resistor-film) is known per se as a device whose electrical resistance changes predictably in response to a force or pressure exerted on its surface. The electrical resistance of this film provided on a carrier decreases as a function of a pressure that is exerted perpendicularly to its surface. Once the film has been calibrated, it will e.g. be possible to determine the compressive load on the basis of the decreased electrical resistance by arranging a current source producing a constant current in series with the film, the voltage drop across the film then being a measure of the pressure that is exerted. An unloaded initial value of the resistance of the film can be determined when the spreader member 6 rotates without material being supplied. The FSR-film supports the blade 8, which is freely pivotable about the pivot pin 24, in a position which is located remotely from the pivot pin 24 in the radial direction. When the spreader member 6 is caused to rotate without material being fed thereto, then, due to the air resistance, the blade 8 will exert on the film a pressure which is expressed in the electrical resistance thereof to be used as the initial value in these circumstances. Preferably, the pivot pin 24 is positioned such that, taken in a plan view, the connecting line between the axis 5 and the centre line of the pivot pin 24 comprises the centre of gravity of the blade 8. In this case, when no material is being spread, the initial value of the resistance of the film is determined almost exclusively by the air resistance.

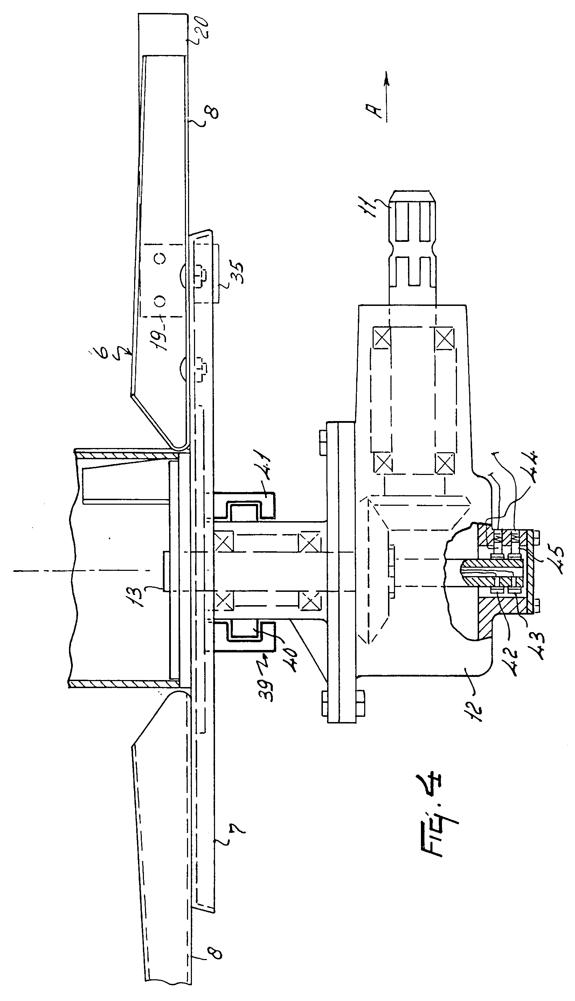

In accordance with the embodiment shown in Figure 7, a wall in the form of a leaf spring 26 is bolted by means of bolts 25 to the rear side of the blade 8 that is rigidly connected to the disc 7. From its point of connection, the leaf spring 26 extends outwardly along the rear side of the blade 8 and at some distance from the outer end thereof is inserted through a slot 27 provided therein, whereafter it curves outwardly in the form of an end portion 28, which end portion 28 extends again parallel to the blade portion guiding the material to be spread. Relative to the rotational direction B, the end portion 28 is now located at the leading side of the blade portion guiding the material, the arrangement being such that, when loaded by the material to be spread, the end portion 28 does not bear against the boundary of the slot 27 nor against the end portion of the blade 8. Taken in the view shown in Figure 7, the end portion 28 follows the curvature of the blade, so that it encloses a slight angle with the more inwardly located blade portion guiding the material to be spread. Near its point of connection, there is affixed to the rear side of the leaf spring 26 a strain gauge 29 whose resistance varies proportionally to the negative strain value therein.

Three further strain gauges, which together with the strain gauge 29 constitute a bridge circuit, can be affixed to the rigid disc 7 in the area between two blades 8.

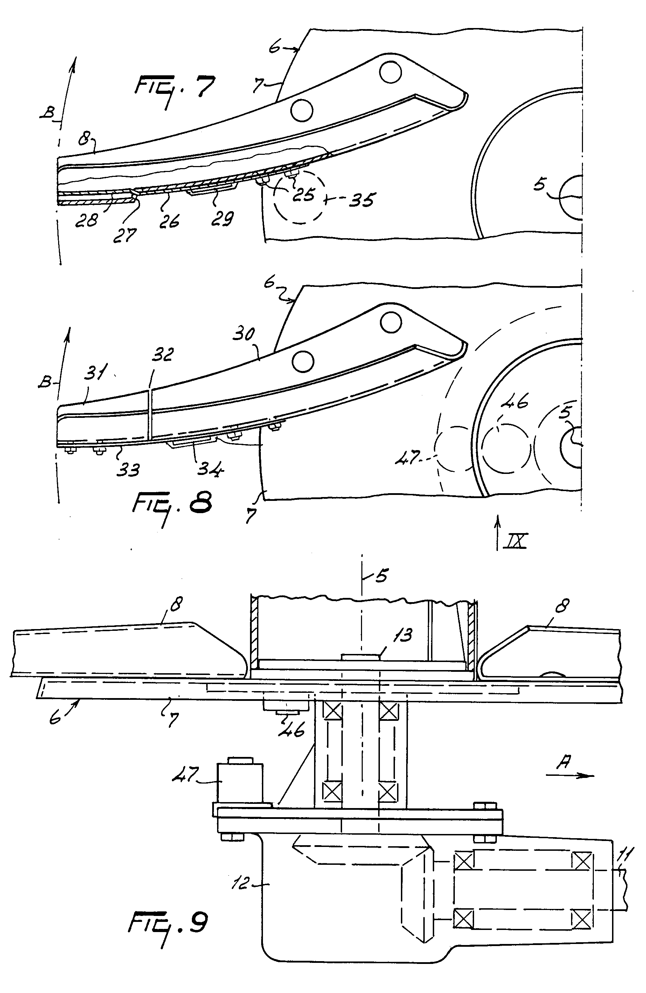

In the embodiment shown in Figure 8, the blade 8 is assembled from two portions, namely an inner portion 30 that is connected rigidly to the disc 7 and an outer portion 31 that is not connected directly to the portion 30. The portions 30 and 31 are separated by a narrow gap 32. The inwardly measured dimension of the wall formed by the outer portion 31 is, for example, approximately 20% of the total length of the blade 8. The outer portion 31 is connected indirectly to the inner portion 30 by means of only one leaf spring 33 which, like in he previous embodiments, has its width arranged parallel to the axis 5. Near the outer end of the outer portion 31, the leaf spring 33 is connected rigidly to the outer portion and, near the periphery of the disc 7, it is connected rigidly to the inner portion 30. The blade 8, consisting of the portions 30 and 31, is curved along its total length, as has been described in the foregoing. Near the connection of the leaf spring 33 to the inner portion 30, there is affixed to the rear side of the leaf spring 33 a strain gauge 34 which, during operation, measures the negative strain value in the rear wall thereof. Like in the previous embodiment, the further strain gauges, which together with the gauge 34 constitute a bridge circuit, can be affixed to the rigid disc 7 in the area halfway between two consecutive blades.

Also in this case, when the spreader member 6 is driven without material being fed thereto, there is produced an initial value of the strain value measured by the strain gauge 34 and caused by the air resistance and the centrifugal forces acting on the outer portion 31, the said outer portion 31 being supported by the leaf spring 33 only. The measuring value to be added to this initial value is produced only by the influence of the material flowing along the blade in the desired direction.

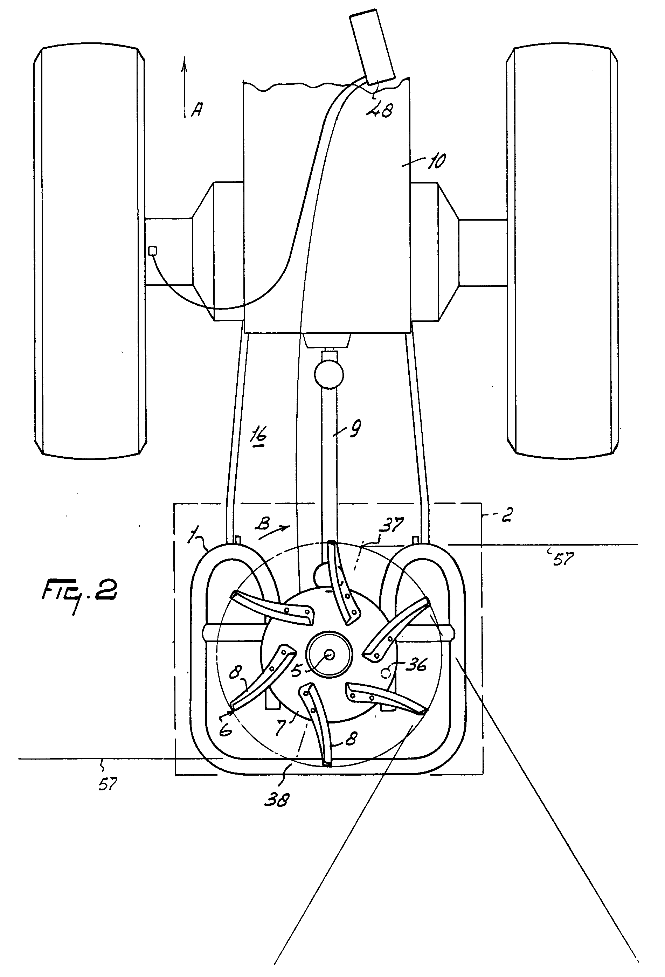

In order to be able to display on a display device to be described hereinafter the desired centre or symmetry plane of the spread pattern, there is arranged in the embodiments shown in Figures 3 to 8 near the outer edge of the disc 7 and at the bottom side thereof a magnetic element 35. See in plan view, the element 35 is positioned on the connecting line between the axis 5 and the position where the material to be spread leaves the wall (i.e. the blade or the leaf spring, respectively). The element 35 is positioned only near the blade that is provided with a measuring device. An induction coil (not shown) is connected rigidly relative to the frame in a position which is spaced from the axis 5 by a distance which is equal to that between the axis 5 and the element 35, so that, during rotation of the spreader member, the element 35 passes the upper side of the induction coil at a short distance once in every revolution. In this manner, there is produced in the induction coil once per revolution a short voltage pulse which is applied to the display device and is displayed after amplification. In the plan view of Figure 2, the location of the induction coil is denoted by the reference numeral 36. Taken in the plan view of Figure 2, the connecting line between the axis 5 and the position 36 divides in equal halves the angle which is bounded by a connecting line between the axis 5 and the position 37 of the blade provided with a measuring device, in which position 37 (per revolution) the first grains of material leave the blade, and the connecting line between the axis 5 and the position 38 where (per revolution) the last grains of material leave this blade, if a spread angle located between the positions 37 and 38 would give a spread pattern which is symmetrical relative to the vertical longitudinal symmetry plane of the machine. In case the actual spread pattern should move relative to a machine in an unwanted manner in the peripheral direction, the pulse produced by the induction coil continues to give the desired centre of the spread pattern and a shift of the spread pattern relative to this pulse can be detected and, optionally, be corrected.

During operation, the material flows through a peripheral angle between the positions 37 and 38 from the blade 8 provided with a measuring device 17 and, of course, from the other blades as well. In the embodiment of Figure 3, the outer leaf spring portion 20 is hit at a slight angle by the material flowing from the blade 8 in its normal direction. As a result thereof, the leaf spring 18 bends rearwardly relative to the rotational direction B, thereby causing in the region of the strain gauge 21 a negative strain which is measured by this strain gauge and whose magnitude is a measure of the quantity of material hitting the outer leaf spring portion 20 at a given instant. In the embodiment shown in Figure 7, the out-flowing material hits the end portion 28 of the leaf spring 26, thereby causing the leaf spring 26 also to bend rearwardly in a direction opposite to the rotational direction B, so that the strain gauge 29 also measures a negative strain. The play between the end portion 28 and the leading side of the curved rear portion of the blade 8 has been chosen such there that, when the largest quantity of material to be anticipated flows along the end portion 28, the end portion 28 just does not contact the rear portion of the blade. In the embodiment of Figure 8, in view of the acceleration forces exerted on the material and the, in plan view, curved shape of the blade, the out-flowing material loads the curved rear portion of the outer portion 31 which, as a result thereof, like the leaf springs in the aforementioned embodiments, bends rearwardly relative to the direction B. As a result, the leaf spring 33 is bent and the strain gauge 34 measures a negative strain. Due to the said acceleration forces, the load on the leaf spring is, of course, also produced on straight blades.

During travel through the angle through which the material flows through the blade 8 provided with a measuring device, the measuring result of the associated strain gauge will produce an image in which, from the position 37 (Figure 2), the quantity of material initially increases from the value zero, remains approximately constant thereafter, and subsequently decreases again to zero when the blade reaches the position 38. Consequently, the area enclosed by such a curve is a measure of the quantity of material spread per revolution.

In order to obtain the most reliable measuring results, it is desirable for the strain gauge (21, 29 and 34, respectively) used in each of the embodiments to be incorporated in a measuring bridge (Wheatstone bridge), the said strain gauge being incorporated in one of the branches and a different strain gauge in each of the three other branches. Preferably, the three other strain gauges are also arranged on the rotatable spreader member so as to avoid measuring errors. As has been described already for the embodiment of Figure 3, all four strain gauges can be used as active strain gauges in order to enhance the measuring sensitivity: two gauges to be provided at the pressure side of the leaf spring 18 and two at the stretch side thereof. In this case, also influences of temperature differences on the strain gauges are compensated for. If only one strain gauge can be affixed to a leaf spring, it is desirable to affix non-active strain gauges on a rigid portion of the spreader member.

The application of a stabilized d.c. voltage of, for example, 6 volts to the strain gauge bridge can be effected via a battery provided on the spreader member. A battery producing a voltage of, for example, 9 volts can be connected to the bridge via a 6 volts voltage controller.

If, in view of the operating life of the battery, the use of such a voltage source would be disadvantageous, use can be made of a direct current generator, as is denoted in Figure 4 by the reference numeral 39. As is shown schematically, a rotor 40 of the generator 39 is fitted rigidly around the bushing in which the shaft 13 is supported, so that in this case the rotor 40 might be designated as the stator. The stator 41, which surrounds the rotor 40 and, the spreader member 6 being driven, rotates about the rotor 40, is fastened to the disc 7. In this case the stator 41 may be considered to be the rotor. The output voltage of the generator 39 (e.g. 12 volts nominally) can be adjusted by simple means, such as a voltage controller, to an undisturbed 6 volts level for feeding the strain gauge bridge. Of course, it is alternatively possible to design the generator 39 as an alternating current generator, and to add a rectifier bridge, a levelling capacitor and a voltage controller to obtain the same result.

In the case of the embodiment of Figure 5 wherein the blade 8 is freely pivotable about the pivot pin 24, the material flowing along the blade will exert via the blade a pressure on the FSR-film provided on the supporting plate 23, in response to which the resistance of the said film decreases. When the film is fed by a source of constant current, the voltage difference thereacross is a measure of the pressure exerted on the film. Alternatively, it is possible to arrange a resistor connected to the disc 7 in series with the film, the power being supplied e.g. by the above-mentioned 6-volts supply. In this case, the voltage drop across the additional resistor is a measure of the pressure exerted by the material.

In order to connect the two outputs of a strain gauge bridge or FSR-film to a display device, these outputs must be led from a rotary component to a stationary component.

A first possibility is a transfer by means of two sliding rings 42, 43 (Figure 4) connected to the measuring device by means of a wiring passed through the hollow drive shaft of the spreader member. The voltage of each of the two sliding rings can be taken off by means of two sliding contacts 44 and 45, respectively, which are connected to a wiring leading to a processing and display device 48 (Figure 1 and 2).

In order to suppress the noise and interferences produced by the sliding rings and the sliding contacts and loading the material to be measured, the signal received by the display device 48 can be applied to a filter which removes frequencies above a predetermined value from the low-frequency measuring signal.

Alternatively, the measuring signal obtained on the spreader member 6 can be applied to a transmitter 46 positioned near the axis 5 at the bottom side of the disc 7 (Figure 9). A receiver 47 is positioned on the upper side of the gear wheel housing 12.

A high-frequency carrier wave is generated in the transmitter 46. This carrier wave is modulated with a series of square pulses each having a duration of approximately 1 to 2 msec. The duration of each pulse depends on the output voltage of the strain gauge bridge and FSR-film, respectively, and can vary as a function of this output voltage between e.g. 1 and 2 msec. The signal transmitted by the transmitter is decoded by the receiver and compared with a series of pulses which are generated in the receiver and have a constant duration and whose positive edges have the same distance in time as, and are synchronous to, the edges generated in the transmitter. In the receiver, the time difference is measured between the negative edges of the received pulses and the edges of the pulses of a constant duration generated in the receiver. These time differences are a measure of the magnitudes of the varying output voltages generated in the strain gauge bridge and the FSR-film, respectively. This communication technique is similar to the technique used in the radio control of models, in this case a simple single-channel design. The differential pulses of both pulse series are thereafter equalized, after amplification, in a display device 48 to form a continuously varying voltage which is displayed on a display screen 49 of the display device 48. On the same display screen is also displayed as a narrow pulse the location of the desired centre of the spread pattern obtained by means of the induction coil 36. Consequently, the shape of the signal recovered from the receiver 47, which signal represents the quantity of material spread as a function of the angle passed through within the total spread angle, and the position of the said signal relative to the desired centre of the spread pattern can be observed by the driver. In case deviations occur in the shape of the signal received by the transmitter 47 relative to the normal, desired picture, this may be caused by the fact that one of the outlet ports of the hopper 2 is obstructed; the driver can then take immediate action. In case the entire graphic representation or curve displayed on the display screen is asymmetrical relative to the desired centre of the spread pattern displayed thereon, the driver can pivot the outlet apertures about the axis 5 by means of the hydraulic cylinder 4 until a symmetrical picture has been obtained.

If the output voltage of the strain gauge bridge or the FSR-film, respectively, is transferred by means of the sliding rings 42, 43 and the sliding contacts 44, 45, the filtered signal can be displayed directly on the display screen, accompanied by the pulse representing the desired centre of the spread pattern.

Of course, it is alternatively possible to mark, separately or as an addition to the foregoing, the position 37 where the first material is to leave the blade carrying a measuring device 17 and also the position 38 where the last material is to leave this blade per revolution relative to the frame (which two positions define the spread angle) by using magnetic elements 35 provided on the disc 7 and induction coils 36 which are in a fixed position relative to the frame. These positions can be displayed on the display screen 49 in the same way as wherein the position of the desired centre of a spread pattern is displayed. Thus, the driver can furthermore establish whether the position of the outflow ports is adjusted appropriately relative to the frame.

As has been stated in the foregoing, the pulse-shaped signal which is recovered from the receiver 47 and has pulse lengths which are proportional to the quantity of material spread at that instant, is compared in the display device 48 with pulses of a constant duration and a differential pulse is obtained. The differential pulses are a measure of the quantity of material pread at a given instant. The differential pulses can be integrated in the display device 48 and be divided by the rate of travel of the tractor hauling the machine. The value obtained therefrom, which can be displayed in the display device 48, is a measure of the quantity of material spread per hectare and can be shown in digits in kilogrammes per ha. In combination with the data displayed on the display screen, this numerical value is sufficient to enable the driver to judge the work delivered and to act immediately in the case of deviations.

The measurement of the tractor speed can be determined, e.g. by means of an induction coil, by establishing the number of revolutions per unit of time of a tractor wheel (preferably, a non-driven tractor wheel). By means of the induction coil arranged in the position 36, the number of revolutions of the spreader member 6 can be measured and be displayed in digits on the display device 48.

The determination of the absolute values of the quantity of material is effected in a test configuration, in which this quantity of material can be measured accurately and be related to the measuring results then measured. The said absolute value in kilogrammes per hectare can then be established on the basis of the rate of travel to be set and of the spread width associated with a given number of revolutions. Of course, a calibration in a test configuration is only valid for the type of material then used. A separate calibration should be effected for each type of material.

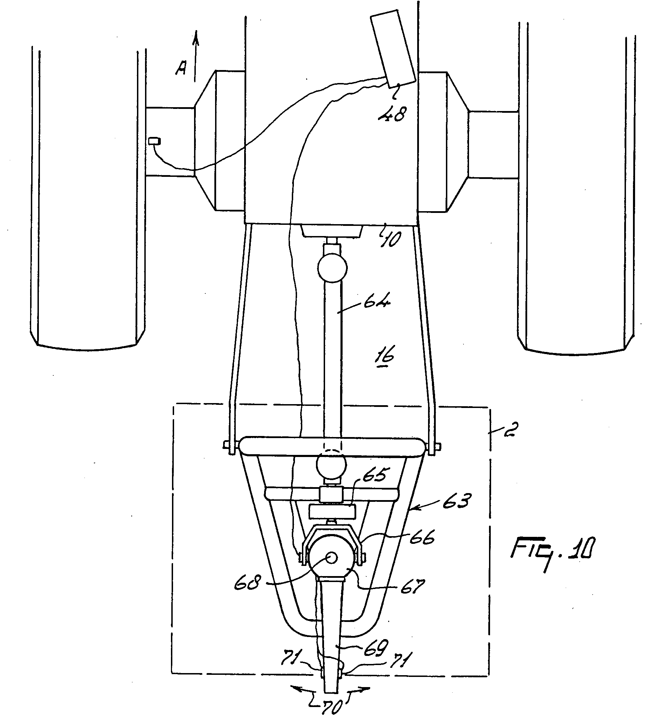

Figure 10 shows a machine for spreading material, which machine spreads the material in a manner which differs from that described for the previous embodiments. A drivable eccentric 65 which drives a bracket 66 in an oscillatory manner is supported on a frame 63 by means of an intermediate shaft 64. The two rear ends of the bracket 66 comprise the two side edges of an inflow member 67 in such a manner as to permit pivoting about a pivot pin which extends transversely to the direction of travel A. Thus, the inflow member 67 is reciprocated in a horizontal plane about an upwardly directed pin 68. Consequently, a rearwardly tapering discharge pipe 69, which is connected rigidly to the inflow member 67, performs the same reciprocating movement in the direction indicated by the arrows 70. Material flowing from the hopper (not shown) into the inflow member 67 leaves the discharge pipe 69 and is spread within a given spread angle. In order to determine the quantity of material spread in kilogrammes per hectare, a strain gauge 71 may be affixed to either side of the thin-walled discharge pipe 69 in a manner similar to that of the preceding embodiments, wherein strain values are also measured on walls (leaf springs). The strain gauges 71 are located in the region of a horizontal symmetry plane of the discharge pipe 69. The strain gauges 71 may be provided with some spacing from the free end of the discharge pipe 69. The two strain gauges 71, which are loaded alternately in opposite senses, thereby increase the sensitivity of the measurement. Two further strain gauges of a measuring bridge may be affixed to a piece of unloaded material near the discharge pipe 69. However, it is alternatively also possible to affix near the horizontal symmetry plane of the discharge pipe 69 on either side of the said pipe two strain gauges, together constituting a measuring bridge, while, like in the first case wherein only two strain gauges are affixed to the pipe 69, the resistance wires are directed, of course, in the longitudinal direction thereof.

In the arrangement of Figure 10, during operation, even when no material is being spread, the mass forces are measured which act on the pipe portions that are located outside the strain gauges. When no material is being spread, the output voltage of the strain gauge bridge has approximately the shape of a sinusoidal voltage. When subsequently material is being spread, the amplitude of this voltage will increase. Since the portion of the strain values measured which results from the measured mass forces varies with a constant amplitude, the said last voltages can be subtracted in the display device from the total value measured during spreading of the material. The differential voltage is a measure of the quantity of material and, after integration, can be available as an absolute value. For the surface area enclosed by the curve representing this differential voltage is a measure of the quantity of material spread during one period of the discharge pipe 69. Of course, the absolute value thus obtained must be calibrated in a test arrangement for each type of material.

In summary, it should be stated that in the above-described manner the driver has the following data available during operation:
a) the quantity of material spread, such as fertilizer, expressed in e.g. kilogrammes per hectare,
b) the fact whether or not the material is spread centrally behind the machine,
c) the fact whether or not the fertilizer is distributed uniformly over the working width.

In order to obtain the data for the object sub a), the deflection of a leaf spring is related to the data measured in practice or in a test arrangement, which data indicate the quantity of fertilizer spread at a given number of revolutions of the spreader member and at a given speed of the tractor. In order to measure the number of revolutions of the spreader member, there is provided a sensor (induction coil) measuring same. Such a sensor is also used to measure the number of revolutions of a tractor wheel and, hence, the rate of travel of the machine. On the basis of these data and the quantity of material flowing along the leaf spring as determined by means of the strain gauge(s) provided thereon, the quantity of material spread is measured and displayed near the driver of the tractor.

In order to be able to establish the data sub b), a measurement is made of the position wherein a first quantity of material leaves a blade provided with a measuring device and of the position relative to the machine frame wherein the last quantity of material leaves the blade. So as to enable an accurate determination, the sensor(s) for measuring the number of revolutions of the spreader member is/are arranged such that the angle can be measured accurately. These data can be displayed near the driver's seat. In case the spreading is not effected straight behind the machine, the driver can adjust the doser apertures by means of an hydraulic cylinder or by other means so as to obtain a symmetrical spread pattern.

The data required for the object sub c) can be made available by continuously measuring the deflection of the leaf spring. When this deflection is not uniform during passing through the spread angle, this means that possibly one of the doser apertures is fully or partly obstructed. These data, too, are immediately available to the driver, so that the problem can be solved immediately.

Strain gauges are highly suitable for measuring the above-mentioned data. However, other types of measuring means may be used as well.

## Claims

1. A machine for spreading material, such as fertilizer, which machine comprises a frame (1; 63), a hopper (2) and at least one spreader member (6; 69) movably mounted to the frame, said spreader member having at least one thrower blade (8), characterized in that at least one measuring device (17, 21 29, 34, 71) is mounted on the spreader member (6, 69), said measuring device being mounted on or arranged near the thrower blade (8) to cooperate therewith by throwing out the material during operation of the machine in such a way that the material guided by the thrower blade (8) moves at least along a portion (20, 23, 28, 31) of the measuring device to exert thereon a force to measure the quantity of material thrown out by the thrower blade (8).

2. A machine as claimed in claim 1, characterized in that the portion (20, 23, 28, 31) of the measuring device forms at least a portion of a wall of the thrower blade (8).

3. A machine as claimed in claim 1 or 2, characterized in that the portion (20, 31) of the measuring device is provided near the outer end of the thrower blade (8).

4. A machine as claimed in any one of the preceding claims, characterized in that the portion of the measuring device 20; 28; 31; 23;) is movable by distortion thereof.

5. A machine as claimed in claim 1, 2 or 3, characterized in that at least a portion of the throwing blade (8) can be moved as a whole and pressed against the measuring device (23) with a measurable force.

6. A machine as claimed in any one of the preceding claims, characterized in that the spreading member (6) provides a transmitter element (35) cooperating with a receiver rigidly mounted to the frame, for transmitting the measuring signal originating from the measuring device

7. A machine as claimed in any one if the preceding claims, characterized in that the measuring signal originating from the measuring device (17) can be calibrated as a measure for the quantity of material spread per unit of surface area.

8. A machine as claimed in any one of the preceding claims, characterized in that the measuring signal originating from the measuring device (17) shows the position of the spread pattern of the material relative to the direction of travel (A) of the device during operation.

9. A machine as claimed in any one of the preceding claims, characterized in that the measuring signal originating from the measuring device (17) provides a measure for a uniform spread of the material.

10. A machine as claimed in any one of the preceding claims, characterized in that the measuring device (17) includes at least one strain gauge (21).

## Patentansprüche

1. Streugerät, beispielsweise für Kunstdünger, mit einem Rahmen (1; 63), einem Vorratsbehälter (2) und mindestens einem Streuglied (6; 69), das an dem Rahmen bewegbar angeordnet ist und mindestens eine Wurfschaufel (8) hat, dadurch gekennzeichnet, dass mindestens eine Messvorrichtung (17, 21, 29, 34, 71) an dem Streuglied (6, 69) befestigt ist, wobei die Messvorrichtung an der Wurfschaufel (8) befestigt oder in deren Nähe angeordnet ist, um mit der Wurfschaufel derart zusammenzuwirken, dass das Gut im Betrieb des Gerätes in der Weise ausgeworfen wird, dass sich das von der Wurfschaufel (8) geführte Gut zumindest entlang eines Teiles (20, 23, 28, 31) der Messvorrichtung bewegt und auf diese eine Kraft ausübt, um die von der Wurfschaufel (8) ausgeworfene Gutmenge zu messen.

2. Gerät nach Anspruch 1, dadurch gekennzeichnet, dass der Teil (20, 23, 28, 31) der Messvorrichtung zumindest einen Teil einer Wandung der Wurfschaufel (8) bildet.

3. Gerät nach Anspruch 1 oder 2, dadurch gekennzeichnet, dass der Teil (20, 31) der Messvorrichtung nahe dem äusseren Ende der Wurfschaufel (8) angeordnet ist.

4. Gerät nach einem der vorhergehenden Ansprüche, dadurch gekennzeichnet, dass der Teil (20; 28; 31; 23) der Messvorrichtung durch verformung beweglich ist.

5. Gerät nach Anspruch 1, 2 oder 3, dadurch gekennzeichnet, dass zumindest ein Teil der Wurfschaufel (8) als Ganzes zu bewegen und mit einer messbaren Kraft gegen die Messvorrichtung (23) zu drücken ist.

6. Gerät nach einem der vorhergehenden Ansprüche, dadurch gekennzeichnet, dass das Streuglied (6) ein Sendeelement (35) aufweist, das mit einem an dem Rahmen starr befestigten Empfänger zusammenwirkt, um das von der Messvorrichtung gelieferte Messsignal zu übertragen.

7. Gerät nach einem der vorhergehenden Ansprüche, dadurch gekennzeichnet, dass das von der Messvorrichtung (17) gelieferte Messsignal als Mass für die pro Flächeneinheit ausgestreute Gutmenge zu eichen ist.

8. Gerät nach einem der vorhergehenden Ansprüche, dadurch gekennzeichnet, dass das von der Messvorrichtung (17) gelieferte Messsignal die Lage des Streubildes des Gutes relativ zur Arbeitsrichtung (A) des im Betrieb befindlichen Gerätes zeigt.

9. Gerät nach einem der vorhergehenden Ansprüche, dadurch gekennzeichnet, dass das von der Messvorrichtung (17) gelieferte Messsignal ein Mass für eine gleichmässige Streuung des Gutes liefert.

10. Gerät nach einem der vorhergehenden Ansprüche, dadurch gekennzeichnet, dass die Messvorrichtung (17) mindestens einen Dehnungsmesser (21) hat.

## Revendications

1. Machine pour épandre de la matière, telle qu'un engrais, cette machine comprenant un châssis (1; 63), une trémie (2) et au moins un organe épandeur (6; 69) monté de manière mobile sur le châssis, cet organe épandeur ayant au moins une aube d'éjection (8), caractérisée en ce qu'au moins un dispositif de mesure (17, 21, 29, 34, 71) est monté sur l'organe épandeur (6, 69), ce dispositif de mesure étant monté sur l'aube d'éjection (8) ou disposé près de celle-ci pour coopérer avec elle en éjectant la matière pendant le travail de la machine, de telle manière que la matière guidée par l'aube d'éjection (8) passe au moins le long d'une partie (20, 23, 28, 31) du dispositif de mesure pour exercer sur ce lui-ci une force pour mesurer la quantité de matière éjectée par l'aube d'éjection (8).

2. Machine selon la revendication 1, caractérisée en ce que la partie (20, 23, 28, 31) du dispositif de mesure forme au moins une partie d'une paroi de l'aube d'éjection (8).

3. Machine selon la revendication 1 ou 2, caractérisée en ce que la partie (20, 31) du dispositif de mesure est prévue près de l'extrémité extérieure de l'aube d'éjection (8).

4. Machine selon l'une quelconque des revendications précédentes, caractérisée en ce que la partie (20; 28; 31, 23) du dispositif de mesure est mobile en se déformant.

5. Machine selon la revendication 1, 2 ou 3, caractérisée en ce qu'au moins une partie de l'aube d'éjection (8) peut être déplacée dans son ensemble et pressée contre le dispositif de mesure (23) avec une force mesurable.

6. Machine selon l'une quelconque des revendications précédentes, caractérisée en ce que l'organe épandeur (6) présente un élément transmetteur (35) coopérant avec un récepteur monté de manière rigide sur le châssis pour transmettre le signal de mesure provenant du dispositif de mesure.

7. Machine selon l'une quelconque des revendications précédentes, caractérisée en ce que le signal de mesure provenant du dispositif de mesure (17) peut être étalonné en tant que mesure de la quantité de matière épandue par unité de surface du terrain.

8. Machine selon l'une quelconque des revendications précédentes, caractérisée en ce que le signal de mesure provenant du dispositif de mesure (17) indique la position de la zone d'épandage de la matière par rapport au sens de marche (A) du dispositif pendant le travail.

9. Machine selon l'une quelconque des revendications précédentes, caractérisée en ce que le signal de mesure provenant du dispositif de mesure (17) fournit une mesure pour l'épandage uniforme de la matière.

10. Machine selon l'une quelconque des revendications précédentes, caractérisée en ce que le dispositif de mesure (17) comporte au moins une jauge extensométrique (21).
